Europäisches Patentamt

European Patent Office

Office européen des brevets

(19)

(11) Numéro de publication : **0 196 987**
**B1**

(12)

# FASCICULE DE BREVET EUROPÉEN

(45) Date de publication du fascicule du brevet :
19.10.88

(51) Int. Cl.⁴ : **B 29 C 45/16**

(21) Numéro de dépôt : 86420081.1

(22) Date de dépôt : 21.03.86

(54) **Moule pour la réalisation d'une pièce composite pourvue d'au moins un élément comportant deux moulages superposes.**

(30) Priorité : 22.03.85 FR 8504518

(43) Date de publication de la demande :
08.10.86 Bulletin 86/41

(45) Mention de la délivrance du brevet :
19.10.88 Bulletin 88/42

(84) Etats contractants désignés :
AT BE CH DE FR GB IT LI NL SE

(56) Documents cités :
CH-A- 298 986
DE-B- 1 241 094
PATENTS ABSTRACTS OF JAPAN, vol. 7, no. 59, (M-199) [1204], 11 mars 1983; & JP - A - 57 203 531 (TOSHIBA KIKAI K.K.) 13-12-1982
PATENTS ABSTRACTS OF JAPAN, vol. 9, no. 229, (M-413) [1952], 14 septembre 1985; & JP - A - 60 85 917 (SEKISUI KAGAKU KOGYO K.K.) 15-05-1985

(73) Titulaire : **CARTIER INDUSTRIE**
**Zone Industrielle**
**F-74300 Thyez (FR)**

(72) Inventeur : **Schomblond, Jacques**
**Montagnieu le Village**
**F-38110 La Tour du Pin (FR)**

(74) Mandataire : **Karmin, Roger et al**
**Cabinet MONNIER 150, cours Lafayette**
**F-69003 Lyon (FR)**

EP 0 196 987 B1

Jouve, 18, rue St-Denis, 75001 Paris, France

## Description

La présente invention est relative à des perfectionnements apportés aux moules destinés à la réalisation de pièces composites telles que les feux multicolores de véhicules, ou les organes réalisés en plusieurs matières.

On connaît un procédé de moulage par injection de pièces multicolores en matière plastique, objet du certificat d'addition français 2 425 317, qui décrit aussi le moule pour la mise en oeuvre dudit procédé. Ce moule comporte des lames transversales qui constituent les parois latérales de plusieurs cavités alignées et dans lesquelles sont injectées des matières de couleurs différentes. Une fois cette injection terminée, les lames sont déplacées transversalement de manière qu'une injection ultérieure remplisse la partie de la cavité encore vide, ces parois latérales étant alors constituées par les éléments déjà moulés.

On comprend aisément que si l'on a affaire à des pièces d'importante épaisseur, les lames sont déformées transversalement par la pression d'injection, de telle sorte que leur déplacement devient pratiquement impossible. Dans ces conditions, le moule décrit dans le document considéré n'est pas susceptible d'être utilisé pour la fabrication de pièces épaisses de plusieurs couleurs et/ou matières.

On connaît aussi, par le document FR 2 462 261, un moule susceptible de permettre l'injection d'une pièce composite d'épaisseur importante du fait qu'il comprend un poinçon qui vient prendre appui contre le fond de la cavité pour constituer les parois latérales de deux chambres dans lesquelles des matières de couleurs et/ou de qualités différentes sont injectées simultanément ou successivement. Puis le poinçon est déplacé de manière qu'entre son extrémité et le fond de la cavité, on détermine une troisième chambre dans laquelle on injecte une autre matière. On comprend aisément que le déplacement du poinçon ne peut pas être fait de manière suffisamment précise pour éviter tout décalage de la troisième injection par rapport aux deux autres. Dans certaines pièces, un tel décalage est absolument proscrit, de telle sorte que ce moule n'est pas utilisable dans ces cas là.

On connaît encore des moules dits « à transfert », c'est-à-dire comportant un poinçon unique et plusieurs matrices, les injections successives étant toujours faites sur le poinçon qui déplace la pièce déjà obtenue dans les matrices successives jusqu'à la dernière injection. On comprend aisément qu'un tel appareillage est extrêmement coûteux et que les éléments moulés dans une matrice puissent être facilement cassés lors de leur transport d'une matrice à l'autre.

On connaît par le document JP-A-57 203 531 un moule du type énoncé dans le préambule de la revendication 1, moule dont la partie coulissante est constituée par deux blocs dans chacun desquels est creusée une partie d'une cavité de forme correspondant à celle de l'un des éléments de la pièce à réaliser, cet élément étant moulé par une première injection dans ladite cavité alors que ladite partie coulissante est décalée par rapport au plan moyen de l'empreinte destinée au moulage d'au moins un autre élément et qui est ménagée dans une partie fixe du moule, cet autre élément étant injecté après le retour de la partie coulissante à la position dans laquelle sa cavité est en correspondance avec l'empreinte. Le moule, ainsi décrit, ne permet pas la réalisation de pièces composites dont les éléments prévus différents du point de vue de la couleur ou de la matière, sont au moins partiellement superposés.

Les perfectionnements qui font l'objet de la présente invention visent à remédier aux inconvénients précités et à permettre la réalisation d'un moule qui permette de produire des pièces minces ou épaisses dont les éléments moulés successivement sont superposés.

Le moule suivant l'invention est caractérisé en ce que le coulisseau comporte trois blocs superposés, les blocs extrêmes étant assujettis l'un à l'autre au moyen de colonnettes de liaison et étant déplaçables simultanément au moyen de pistons, le moulage étant réalisé entre l'un des blocs extrêmes et un bloc intermédiaire, des moyens étant prévus pour positionner le bloc intermédiaire par rapport aux blocs extrêmes dans deux positions, une première position où la partie de la cavité de moulage ménagée dans le coulisseau a une épaisseur réduite et où est réalisé un premier moulage et une seconde position où la partie de la cavité de moulage ménagée dans le coulisseau a une plus grande épaisseur et où est réalisé un second moulage superposé au premier, les blocs extrêmes coopérant, d'une part avec des butées de fin de course, et d'autre part avec des cales assurant leur verrouillage durant les deux moulages successifs.

Le dessin annexé, donné à titre d'exemple, permettra de mieux comprendre l'invention, les caractéristiques qu'elle présente et les avantages qu'elle est susceptible de procurer :

Fig. 1 montre en coupe un moule établi conformément à l'invention.

Fig. 2 à 4 illustrent les différentes phases de fonctionnement du moule de fig. 1.

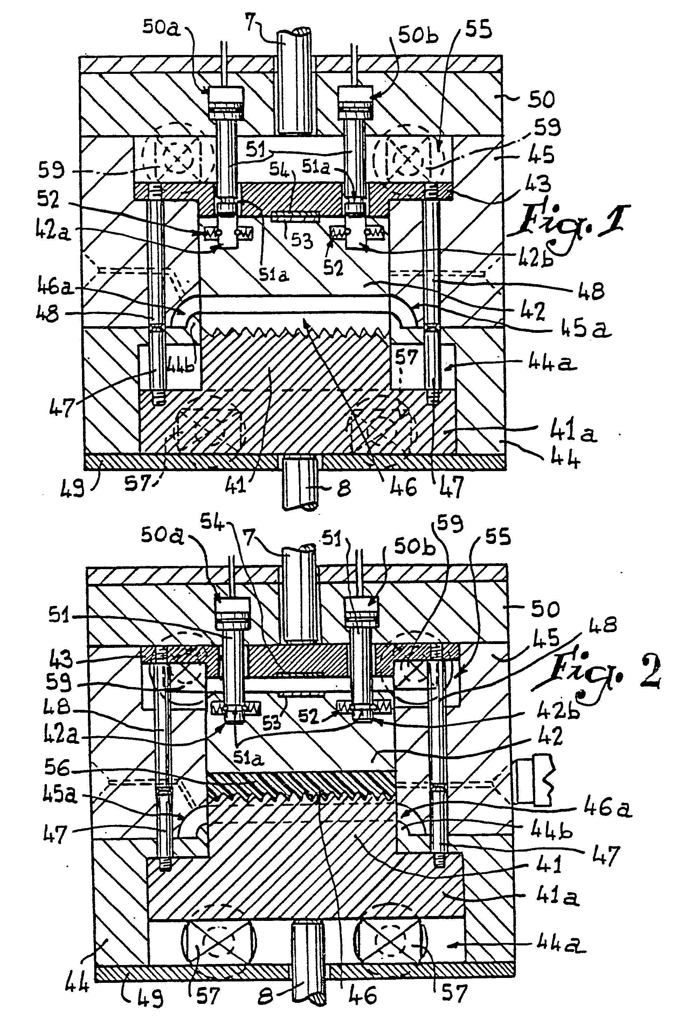

Le moule illustré en fig. 1 est destiné à la réalisation d'une pièce multicolore ou réalisée en deux matières différentes, un des moulages étant superposé à l'autre.

Le coulisseau de ce moule est réalisé au moyen de trois blocs différents référencés respectivement 41 pour le bloc intérieur, 42 pour le bloc intermédiaire et 43 pour le bloc supérieur. La partie fixe du moule est quant à elle réalisée comme à l'accoutumée en deux pièces, soit un poinçon inférieur 44 et une matrice supérieure 45. Le poinçon 44 comporte un évidement 44a dans lequel une semelle 41a du bloc inférieur 41 du coulisseau peut se déplacer. La face supérieure du poinçon 44 qui constitue le plan de joint du moule, est pourvue d'un bourrelet 44b, qui, avec une creusure 45a ménagée dans la face correspondante de la matrice 45, détermine une partie 46a d'une cavité 46. Des colonnettes 47 solidaires par l'une de leurs extrémités de la semelle 41a du bloc 41 sont en contact par leur extrémité opposée avec le bout d'autres colonnettes 48 solidaires du bloc supérieur 43.

On observe que l'évidement 44a est fermé par une plaque 49 que traverse un piston 8 dont l'extrémité libre porte contre le bloc 41.

La matrice 45 reçoit un couvercle 50 dans lequel sont réalisés deux cylindres 50a, 50b dans lesquels sont placés deux pistons 51 dont les tiges traversent le bloc supérieur 43 et pénètrent dans deux alésages borgnes 42a et 42b pratiqués dans le bloc 42.

Dans ces alésages sont prévus des dispositifs d'enclenchement à billes 52 qui sont destinés à coopérer avec des gorges 51a pratiquées au voisinage de l'extrémité des tiges des pistons 51. Deux aimants 53, 54 sont fixés sur les deux faces en vis-à-vis des blocs 42 et 43 pour des raisons qu'on expliquera mieux plus loin.

Le fonctionnement est le suivant :

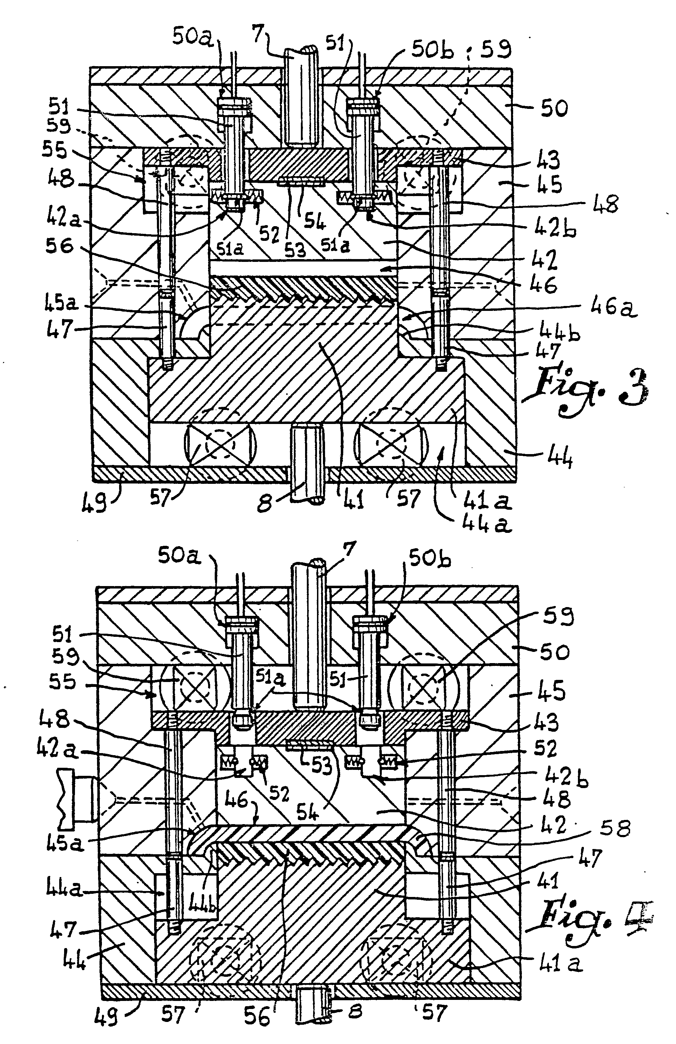

En fig. 1 le bloc inférieur 41 repose sur la plaque 49 tandis qu'une semelle du bloc 43 est en appui sur le fond d'un chambrage 55 ménagé dans le bloc 45 et qui est fermé par le couvercle 50. La cavité 46 des blocs 41, 42, 43 comporte une double épaisseur destinée au moulage des deux couches successives de matières différentes et/ou multicolores. Si l'on fait remonter le piston 8, le bloc 41 s'élève jusqu'à porter contre le fond de l'évidement 44a et les colonnettes 47 et 48 provoquent la montée correspondante du bloc supérieur 43 jusqu'à ce qu'il vienne en appui contre le couvercle 50 (fig. 2). Grâce à la présence des aimants 53 et 54, le bloc intermédiaire 42 monte avec le bloc supérieur, de telle sorte que ses dispositifs d'enclenchement à billes 52 viennent s'encliqueter dans les gorges 51a des pistons 51 qui ne peuvent pas monter du fait que leurs têtes sont soumises à la pression d'un fluide. Les positions des gorges 51a et des dispositifs 52 sont telles que l'ascension du bloc intermédiaire 42 est stoppée avant que le bloc supérieur 43 ne vienne en appui contre le couvercle 50, les bouts des pistons 51 venant buter au fond des alésages borgnes 42a, 42b, comme illustré en fig. 2. Dans ces conditions, la cavité 46 diminue d'épaisseur et se trouve donc réduite à celle du premier moulage 56 à effectuer. Lors de ce premier moulage, l'on introduit des cales 57 entre la plaque 49 et le bloc 41. Une fois le premier moulage refroidi, on actionne les pistons 51 de manière à remonter le bloc intermédiaire 42 contre celui supérieur 43, de telle sorte que la cavité 46 devient plus épaisse (fig. 3). On fait alors effectuer au coulisseau une translation complète vers le bas après extraction des cales 57 en actionnant le piston 7. Toutes les composantes du moule reprennent alors la place qu'elles occupaient initialement comme illustré en fig. 1. Dans ces conditions, le dessus du premier moulage 56 forme la paroi inférieure de la partie centrale de la cavité 46, laquelle se trouve en correspondance avec ses deux parties extrêmes 46a. On peut alors effectuer le second moulage 58 (fig. 4). On obtient ainsi une pièce finie composée de deux moulages accolés. Bien entendu, on peut prévoir des encastrements des deux moulages l'un par rapport à l'autre en ménageant des formes correspondantes dans la cavité 46.

Il va de soi que des cales 59 sont engagées entre le couvercle 50 et le bloc supérieur 43 lors de l'injection destinée à réaliser le second moulage 58.

## Revendications

1. Moule destiné à la réalisation d'un corps en plusieurs éléments du genre dont au moins une partie de la cavité destinée au moulage de l'un desdits éléments est ménagée dans un coulisseau déplaçable dans les deux sens, caractérisé en ce que le coulisseau comporte trois blocs superposés (41, 42, 43), les blocs extrêmes (41, 43) étant assujettis l'un à l'autre au moyen de colonnettes de liaison (47, 48) et étant déplaçables simultanément au moyen de pistons (7, 8), le moulage étant réalisé entre l'un (41) des blocs extrêmes et un bloc intermédiaire (42), des moyens étant prévus pour positionner le bloc intermédiaire (42) par rapport aux blocs extrêmes (41, 43) dans deux positions, une première position où la partie de la cavité de moulage ménagée dans le coulisseau a une épaisseur réduite et où est réalisé un premier moulage et une seconde position où la partie de la cavité de moulage ménagée dans le coulisseau a une plus grande épaisseur et où est réalisé un second moulage superposé au premier, les blocs extrêmes (41, 43) coopérant, d'une part avec des butés de fin de course et, d'autre part, avec des cales (57, 59) assurant leur verrouillage durant les deux moulages successifs.

2. Moule suivant la revendication 1, caractérisé en ce que les moyens de provoquer le changement d'épaisseur de la cavité (46) consistent d'une part en une paire d'aimants (53, 54) respectivement portés par le bloc intermédiaire (42) et celui extrême (43) et d'autre part en des pistons (51) coopérant avec des cylindres fixes (50a, 50b) et dont les extrémités des tiges comportent des gorges (51a), coopérant avec des dispositifs d'enclenchement à billes (52) montés dans le bloc intermédiaire (5).

3. Moule suivant la revendication 1, caractérisé en ce que les colonnettes (47, 48) sont respectivement assujetties aux blocs (41, 43), leurs extrémités libres étant en contact.

4. Moule suivant la revendication 1, caractérisé en ce que les butées des blocs extrêmes sont constituées par les deux faces en vis-à-vis de deux évidements (44a, 45a) réalisés dans la partie fixe (44, 45) du moule.

Claims

1. Mould intended for executing a body in a number of elements of the type whereof at least one part of the cavity intended for the moulding of one of the said elements is arranged in a slide movable in both directions, characterised in that the slide comprises three superimposed blocks (41, 42, 43), the end blocks (41, 43) being fastened together by means of small connecting columns (47, 48) and being movable simultaneously by means of pistons (7, 8), the moulding being executed between one (41) of the end blocks and an intermediate block (42), means being provided to position the intermediate block (42) in relation to the end blocks (41, 43) in two positions, a first position wherein the part of the moulding cavity arranged in the slide has a lesser thickness and wherein a first moulding is executed, and a second position wherein the part of the moulding cavity arranged in the slide has a greater thickness and wherein a second moulding is executed, superimposed on the first, the end blocks (41, 43) cooperating on the one hand with end-of-stroke stops and on the other hand with wedges (57, 59) ensuring their locking during the two successive mouldings.

2. Mould according to Claim 1, characterised in that the means of bringing about the change of thickness of the cavity (46) consist on the one hand of a pair of magnets (53, 54) supported respectively by the intermediate block (42) and the end one (43) and on the other hand of pistons (51) cooperating with fixed cylinders (50a, 50b) and whereof the ends of the rods comprise grooves (51a) cooperating with the interlocking ball bearing devices (52) fitted into the intermediate block (5).

3. Mould according to Claim 1, characterised in that the small columns (47, 48) are fastened respectively to the blocks (41, 43), their free ends being in contact.

4. Mould according to Claim 1, characterised in that the stops of the end blocks are constituted by the two faces opposite two recesses (44a, 44b) executed in the fixed part (44, 45) of the mould.

**Patentansprüche**

1. Form zur Herstellung eines Gegenstandes aus mehreren Elementen, bei der zumindest ein Bereich des für das Formen eines der Elemente vorgesehenen Hohlraums in einem in beiden Richtungen verschiebbaren Gleitstück ausgearbeitet ist, dadurch gekennzeichnet, daß das Gleitstück drei übereinanderliegende Blöcke (41, 42, 43) aufweist, wobei die äußeren Blöcke (41, 43) über Verbindungssäulen (47, 48) miteinander in Eingriff stehen und gemeinsam über Kolben (7, 8) bewegbar sind, daß das Formen zwischen einem (41) der äußeren Blöcke und dem Zwischenblock (42) realisiert wird, wobei Mittel vorgesehen sind, die den Zwischenblock (42) in bezug auf die äußeren Blöcke (41, 43) in zwei Stellungen einstellen, nämlich eine erste Stellung, in der der in dem Gleitstück ausgeformte Bereich des Formhohlraums eine verringerte Dicke aufweist und in der das erste Formteil hergestellt wird, und eine zweite Stellung, in der der in dem Gleitstück ausgeformte Bereich des Formhohlraums eine größere Dicke aufweist und in der ein zweites auf dem ersten liegendes Formteil hergestellt wird, und daß die äußeren Blöcke (41, 43) einerseits mit Anschlägen für die Endstellung und andererseits mit Zwischenkeilen (57, 59) zusammenarbeiten, die ihre Arretierung während der aufeinanderfolgenden Formvorgänge sicherstellen.

2. Form nach Anspruch 1, dadurch gekennzeichnet, daß die Mittel zum Verändern der Dicke des Hohlraums (46) einerseits aus zwei Magneten (53, 54), die an dem Zwischenblock (42) und dem äußeren Block (43) befestigt sind, und andererseits aus Kolben (51) bestehen, die mit festen Zylindern (50a, 50b) zusammenarbeiten und bei denen an den Enden der Kolbenstangen Auskehlungen (51a) vorgesehen sind, die mit in dem Zwischenblock (42) angeordneten Kugelrastvorrichtungen (52) zusammenarbeiten.

3. Form nach Anspruch 1, dadurch gekennzeichnet, daß die Säulen (47, 48) jeweils an den Blöcken (41, 43) befestigt sind, wobei ihre freien Enden miteinander in Kontakt sind.

4. Form nach Anspruch 1, dadurch gekennzeichnet, daß die Anschläge der äußeren Blöcke aus zwei Flächen bestehen, die zwei in dem festen Teil (44, 45) der Form vorgesehenen Ausnehmungen (44a, 45a) gegenüberliegen.

Fig. 1

Fig. 2

Fig. 3

Fig. 4